# EUROPÄISCHE PATENTSCHRIFT

(11) **EP 0 576 443 B1**
(45) Veröffentlichungstag und Bekanntmachung des Hinweises auf die Patenterteilung: **29.11.1995**
(21) Anmeldenummer: 92905375.9
(22) Anmeldetag: 28.02.1992
(51) Int. Cl.: B29B 7/74

(54) **VORRICHTUNG ZUM HERSTELLEN EINES POLYURETHAN-REAKTIONSGEMISCHES**
DEVICE FOR PRODUCING A POLYURETHANE REACTION MIXTURE
DISPOSITIF POUR LA FABRICATION D'UN MELANGE REACTIONNEL DE POLYURETHANE

(30) Priorität: 14.03.1991 DE 4108186
(43) Veröffentlichungstag der Anmeldung: 05.01.1994
(73) Patentinhaber: BAYER AG, 51368 Leverkusen (DE)
(72) Erfinder: KRIPPL, Kurt, D-4019 Monheim (DE); EBELING, Wilfried, D-5000 Köln 80 (DE); FIETZ, Jürgen, D-5000 Köln (DE); SULZBACH, Hans-Michael, D-5330 Königswinter 21 (DE); RAFFEL, Reiner, D-5200 Siegburg (DE); ALTHAUSEN, Ferdinand, D-5206 Neunkirchen 1 (DE)
(86) Internationale Anmeldenummer: EP9200440
(87) Internationale Veröffentlichungsnummer: WO9216345

(56) Entgegenhaltungen:
- DE-A- 2 250 970
- DE-A- 2 836 286
- FR-A- 858 413
- GB-A- 2 126 910

## Beschreibung

Die Erfindung betrifft eine Vorrichtung zum Herstellen eines Polyurethan-Reaktionsgemisches aus fließfähigen Reaktionskomponenten und einem fließfähigen Zusatzstoff, insbesondere Treibmittel, wobei die Reaktionskomponentenströme dosiert einer Mischzone zugefördert werden und einem der Reaktionskomponentenströme der fließfähige Zusatzstoff zudosiert wird, wie aus DE-B-1 153 153 (entsprechend GB-B-957 748) bekannt ist.

Gemäß DE-B-1 128 125 (entsprechend US-A-3 230 047) saugt man Treibmittel mittels einer Pumpe an und dosiert es in einen Vormischer ein, wo es mit der Polyolkomponente vorvermischt wird. Aufgrund der niedrigen Viskosität von Treibmitteln und ihrer niedrigen Siedepunkte müssen bei derartigen Pumpensystemen hohe saugseitige Vordrücke vorhanden sein, welche externe, in die Umgebung entweichende Leckagen verursachen. In sich geschlossene Pumpensysteme, wie Membranpumpen, sind aufgrund ihrer pulsierenden Förderung nicht geeignet.

Gemäß DE-B-1 153 153 (entsprechend GB-B-957 748) kann die Verfahrensweise die gleiche sein wie vorstehend beschrieben. Die darin gezeigte Vorrichtung läßt eine Abwandlung, welche jedoch nicht ausdrücklich beschrieben ist, offen, indem die Polyolkomponente mit einer Vorpumpe angesaugt und einem Vormischer zudosiert wird, in welchen auch das Treibmittel eingespeist wird, wobei dieses Gemisch von einer Hauptpumpe angesaugt und einem Mischkopf zudosiert wird. Würde man derart arbeiten, so ergäben sich bei Druckschwankungen im Zuleitungssystem erhebliche Abweichungen in der zudosierten Treibmittelmenge, welche das Mischungsverhältnis völlig verfälschen und die Eigenschaften des Endproduktes nachteilig beeinflussen würden.

Ferner sind auch bereits Nebenstromdosierverfahren bekannt geworden (GB-A 2 126 910 und DE-A 2 836 286).

Es besteht die Aufgabe, eine Vorrichtung zu schaffen, womit auch kleine Mengen von fließfähigen d.h. flüssigen oder gegebenenfalls gasförmigen Zusatzstoffen, insbesondere Treibmitteln, auch bei Druckschwankungen im Zuleitungssystem in der richtigen Menge bzw. unter vernachlässigbaren Abweichungen leckagefrei eingebracht werden können.

Diese Aufgabe wird erfindungsgemäß durch die Vorrichtung nach Anspruch 1 gelöst. Der mit fließfähigem Zusatzstoff zu beladende Reaktionskomponentenstrom wird dabei in einen Hauptstrom und einen Nebenstrom aufgeteilt, wobei der Nebenstrom dosiert abgezweigt und in diesen dosierten Nebenstrom der fließfähige Zusatzstoff eingebracht wird, und daß der mit fließfähigem Zusatzstoff beladene Nebenstrom wieder mit dem Hauptstrom vereinigt wird und wobei
das Einbringen des fließfähigen Zusatzstoffes in einem geschlossenen System erfolgt, vorzugsweise durch Ansaugen zusammen mit der Reaktionskomponente des Nebenstromes. Durch die Eindosierung des fließfähigen Zusatzstoffes in einen Nebenstrom lassen sich Fördermengenschwankungen umso geringer halten, je kleiner die Fördermenge des Nebenstromes an Reaktionskomponente zu jener des Hauptstromes ist.

Bei der Herstellung eines Polyurethan-Reaktionsgemisches wird man den fließfähigen Zusatzstoff, wie üblich, in die höherviskose Polyolkomponente einbringen, wenn dieser Zusatzstoff niedrigere Viskosität als das Polyol aufweist, was bei Treibmitteln die Regel ist. Höherviskose Zusatzstoffe dosiert man vorzugsweise in die dünnflüssige Isocyanatkomponente ein.

Auf diese Weise ist es möglich, auch bei Druckschwankungen im Zuleitungssystem die Fördermenge des Zusatzstoffes im wesentlichen konstant zu halten bzw. die. Abweichung des Mengenverhältnisses zur zu beladenden Reaktionskomponente vernachlässigbar klein zu halten. Leckagen nach außen sind auch bei Verwendung der auf dem Markt erhältlichen Kolbendosierpumpen nicht zu befürchten, da die Zusatzstoffe nicht allein, sondern zusammen mit der Reaktionskomponente von nur einer Dosierpumpe gefördert werden. Der technische Mehraufwand ist dabei, verglichen mit der Qualitätsverbesserung des Endproduktes, gering.

Gemäß einer besonderen Ausführungsform ist die Förderleistung der zweiten Dosierpumpe wesentlich kleiner als diejenige der ersten Förderpumpe, vorzugsweise beträgt sie maximal 10 % davon.

Gemäß einer weiteren besonderen Ausführungsform der Vorrichtung ist die erste Dosierpumpe in der Zuleitung vor deren Verzweigung in die Hauptleitung und Nebenleitung angeordnet.

In diesem Falle sind die erste und die zweite Dosierpumpe in Reihe angeordnet, und die erste Dosierpumpe saugt die gesamte benötigte Menge an Reaktionskomponente aus dem in der Regel unter einem Vordruck von 2 bis 4 bar stehenden Vorratsbehälter an. Davon wird dann mittels der zweiten in der Nebenleitung angeordneten Dosierpumpe der Nebenstrom abgetrennt, welcher anschließend mittels der dritten Dosierpumpe gleichzeitig mit dem Zusatzstoff angesaugt wird.

Alternativ ist die erste Dosierpumpe in der Hauptleitung angeordnet.

Hier arbeiten die erste und die zweite Dosierpumpe parallel, so daß die Summe ihrer Fördermengen der gesamten Fördermenge an Reaktionskomponente entspricht. Ansonsten ist die Arbeitsweise die gleiche wie bei der ersten Ausführungsform.

Vorzugsweise ist in der Nebenleitung hinter der Einmündung der Zusatzstoff-Zuleitung ein Mischer angeordnet.

Dadurch wird der Zusatzstoff in der Reaktionskomponente homogen verteilt. Der Mischer kann vor oder hinter der dritten Dosierpumpe angeordnet sein.

Gemäß einer weiteren besonderen Ausführungsform ist hinter der Vereinigung der Hauptleitung mit der Nebenleitung ein Mischer in der Reaktionskomponenten-Zuleitung angeordnet.

Auch hierbei läßt sich der Zusatzstoff im Reaktionskomponentenstrom homogen verteilen.

In der Zeichnung sind zwei Ausführungsbeispiele der Erfindung rein schematisch im Fließschema dargestellt und nachstehend näher erläutert.

Es zeigen:
- Fig. 1: eine Vorrichtung gemäß erstem Ausführungsbeispiel und
- Fig. 2: eine Vorrichtung gemäß zweitem Ausführungsbeispiel.

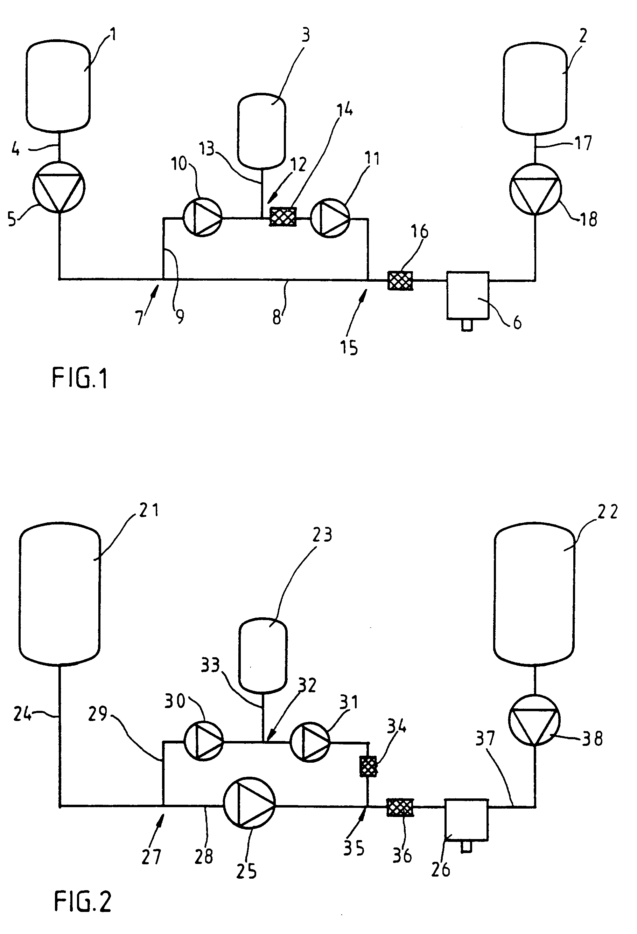

In Fig. 1 besteht die Vorrichtung aus einem Vorratsbehälter 1 für Polyol als Reaktionskomponente, aus einem Vorratsbehälter 2 für Isocyanat als Reaktionskomponente und aus einem Vorratsbehälter 3 für ein flüssiges Treibmittel als Zusatzstoff. Vom Vorratsbehälter 1 führt eine Zuleitung 4 über eine erste Dosierpumpe 5 zu einem Mischkopf 6. Hinter der ersten Dosierpumpe 5 ist in der Zuleitung 4 eine Verzweigung 7 vorgesehen, von welcher eine Hauptleitung 8 und eine Nebenleitung 9 abführen. In der Nebenleitung 9 sind eine zweite Dosierpumpe 10 sowie eine dritte Dosierpumpe 11 angeordnet, zwischen denen sich die Einmündung 12 einer von dem Zusatzstoff-Vorratsbehälter 3 abführenden Zuleitung 13 befindet. Außerdem ist in der Nebenleitung 9 der Einmündung 12 nachgeordnet ein Mischer 14 vorgesehen. Die Nebenleitung 9 und die Hauptleitung 8 kommen in einer Vereinigung 15 wieder zusammen. Dahinter ist in der Zuleitung 4 ein statischer Mischer 16 vorgesehen. Vom Vorratsbehälter 2 führt eine Zuleitung 17 über eine Dosierpumpe 18 zum Mischkopf 6.

In Fig. 2 besteht die Vorrichtung aus einem Vorratsbehälter 21 für Polyol als Reaktionskomponente und einem Vorratsbehälter 22 für Isocyanat als Reaktionskomponente und aus einem Vorratsbehälter 23 für ein flüssiges Treibmittel als Zusatzstoff. Vom Vorratsbehälter 21 führt eine Zuleitung 24 zu einem Mischkopf 26. Sie besitzt eine Verzweigung 27, an der sie sich in eine Hauptleitung 28 und eine Nebenleitung 29 aufteilt. In der Hauptleitung 28 ist eine erste Dosierpumpe 25 angeordnet; in der Nebenleitung 29 sind eine zweite Dosierpumpe 30 sowie eine dritte Dosierpumpe 31 vorgesehen, zwischen denen sich die Einmündung 32 einer von dem Zusatzstoff-Vorratsbehälter 23 abführenden Zuleitung 33 befindet. Außerdem ist in der Nebenleitung 29 der Einmündung 32 nachgeordnet ein Mischer 34 vorgesehen. Hauptleitung 28 und Nebenleitung 29 kommen in einer Vereinigung 35 wieder zusammen. Dahinter ist in der Zuleitung 34 ein statischer Mischer 36 vorgesehen. Vom Vorratsbehälter 22 führt eine Zuleitung 37 über eine Dosierpumpe 38 zum Mischkopf 26.

Die Arbeitsweise der Vorrichtung gemäß Fig. 1 ist folgende: Die Vorratsbehälter 1, 2 und 3 stehen unter einem Vordruck von jeweils 3 bar. Die Dosierpumpe 5 fördert 5.000 g/min Polyol. Davon werden 150 g/min von der Dosierpumpe 10 in die Nebenleitung 9 abgezweigt; die restliche Menge von 4.850 g/min strömt durch die Hauptleitung 8. Die Dosierpumpe 11 arbeitet mit einer Förderleistung von 300 g/min, so daß sie neben dem von der Dosierpumpe 10 angebotenen Komponentenstrom von 150 g/min gleichzeitig 150 g/min des flüssigen Treibmittels ansaugt. Das Verhältnis von Polyol zu Treibmittel beträgt also 100 Gew.-Teile zu 3 Gew.-Teilen. Im Mischer 14 wird das Treibmittel im Polyol fein verteilt. Im Mischer 16 wird der mit Treibmittel beladene Nebenstrom mit dem Hauptstrom homogenisiert. Die Dosierpumpe 18 fördert 5.000 g/min Isocyanat zum Mischkopf 6. Beide Zuführsysteme stehen unter einem Druck von 100 bar.

Entsteht beispielsweise polyolseitig ein Druckanstieg auf 120 bar, ist damit ein Fördermengenabfall von ca. 2 % verbunden. D.h. die Dosierpumpe 5 ändert ihre Fördermenge von 5.000 auf 4.900 g/min und die Dosierpumpe 11 ändert ihre Fördermenge von 300 auf 294 g/min. Die Dosierung der Pumpe 10 bleibt konstant auf 150 g/min, da sich ihr Gegendruck nicht ändert. Der Mengenabfall an Treibmittel beträgt nur 6 g/min. Es werden also noch 144 g/min Treibmittel gefördert. Das Verhältnis von Polyol zu Treibmittel beträgt 100 Gew.-Teile zu 2,94 Gew.-Teilen.

Die Arbeitsweise der Vorrichtung gemäß Fig. 2 ist folgende: Die Vorratsbehälter 21, 22 und 23 stehen unter einem Vordruck von jeweils 4 bar. Die Dosierpumpe 25 fördert 4.850 g/min Polyol durch die Hauptleitung 28 und die Dosierpumpe 30 fördert 150 g/min Polyol durch die Nebenleitung 29. Die Dosierpumpe 31 arbeitet mit einer Förderleistung von 300 g/min, so daß sie neben dem durch die Dosierpumpe 30 angebotenen Komponentenstrom 150 g/min des flüssigen Treibmittels ansaugt. Das Verhältnis von Polyol zu Treibmittel beträgt also 100 Gew.-Teile zu 3 Gew.-Teilen. Im Mischer 34 wird das Treibmittel im Polyol fein verteilt. Im Mischer 36 wird der mit dem Treibmittel beladene Nebenstrom mit dem Hauptstrom homogenisiert. Die Dosierpumpe 38 fördert 5.000 g/min Isocyanat zum Mischkopf 26. Beide Zuführsysteme stehen unter einem Druck von 100 bar. Entsteht polyolseitig ein Druckanstieg auf 120 bar, ist damit ein Fördermengenabfall von ca. 2 % verbunden. Die Dosierpumpe 25 fördert nur noch 4.753 g/min. Die Dosierpumpe 30 bleibt konstant auf 150 g/min und die Dosierpumpe 31 fördert 294 g/min, also 6 g/min weniger Treibmittel. Die Gesamtfördermenge an Polyol betragt 4.903 g/min, an Treibmittel 144 g/min, d.h. 100 Gew.-Teile Polyol kommen auf 2,94 Gew.-Teile Treibmittel.

Arbeitet man mit der Vorrichtung gemäß DE-B-1 153 153 (entspricht GB-B-957 748) nach der eingangs erwähnten, nicht näher beschriebenen Variante, so fließen dem Polyolstrom von 5.000 g/min 150 g/min Treibmittel zu, wenn die Gemischpumpe auf eine Fördermenge von 5.150 g/min eingestellt ist. Der Systemdruck beträgt 100 bar. Das Verhältnis von Polyol zu Treibmittel beträgt 100 Gew.-Teile zu 3 Gew.-Teilen. Steigt der Druck auf 120 bar an, so ist damit ein Fördermengenabfall von 2 % verbunden. D.h. die Gemischpumpe fördert nur noch 5047 g/min. Der Fördermengenabfall von 103 g/min geht hier allein zu Lasten des Treibmittels, wobei das Polyol mit der Vorpumpe weiterhin in der richtigen Menge zudosiert wird, so daß nur noch 47 g/min Treibmittel eindosiert werden. Das Verhältnis von Polyol zu Treibmittel bricht total ein und beträgt nur noch 100 Gew.-Teile zu 0,94 Gew.-Teilen.

Diese angeführten Zahlenbeispiele in [g/min] gelten exakt nur, wenn die spezifischen Gewichte von Polyol und Treibmittel gleich groß sind.

## Patentansprüche

1. Vorrichtung zum Herstellen eines Polyurethan-Reaktionsgemisches aus fließfähigen Reaktionskomponenten und einem fließfähigen Zusatzstoff, insbesondere Treibmittel, wobei der Zusatzstoff mit einem Teilstrom einer der Reaktionskomponenten vorvermischt wird, bestehend aus Reaktionskomponenten-Vorratsbehältern (1, 2; 21, 22) sowie einem Zusatzstoff-Vorratsbehälter (3; 23), wobei von den Reaktionskomponenten-Vorratsbehältern (1, 2; 21, 22), Zuleitungen (4, 17; 24, 37) über erste Dosierpumpen (5, 18; 25, 38) zu einem Mischkopf (6; 26) führen und vom Zusatzstoff-Vorratsbehälter (3; 23) eine Zusatzstoffzuleitung (13; 33) abführt und in die Zuleitung (4; 24) der mit fließfähigem Zusatzstoff zu beladenen Reaktionskomponente einmündet, wobei diese Zuleitung (4; 24) sich in eine Hauptleitung (8; 28) und eine Neberleitung (9; 29) verzweigt, daß in der Nebenleitung (9; 29) eine zweite Dosierpumpe (10; 30) und eine dritte Dosierpumpe (11; 31) angeordnet sind, zwischen denen die Zusatzstoffzuleitung (13; 33) einmündet, daß die dritte Dosierpumpe (11; 31) eine um die zuzuführende Zusatzstoffmenge höhere Förderleistung gegenüber der zweiten Dosierpumpe (10; 30) aufweist und daß sich hinter der dritten Dosierpumpe (11; 31) die Nebenleitung (9; 29) wieder mit der Hauptleitung (8; 28) vereinigt.

2. Vorrichtung nach Anspruch 1, dadurch gekennzeichnet, daß die Förderleistung der zweiten Dosierpumpe (10; 30) wesentlich kleiner als diejenige der ersten Förderpumpe (5; 25) ist.

3. Vorrichtung nach Anspruch 1 oder 2, dadurch gekennzeichnet, daß die erste Dosierpumpe (5) in der Zuleitung (4) vor deren Verzweigung (7) in die Hauptleitung (8) und Nebenleitung (9) angeordnet ist.

4. Vorrichtung nach Anspruch 1 oder 2, dadurch gekennzeichnet, daß die erste Dosierpumpe (25) parallel zur zweiten und dritten Dosierpumpe (30, 31) in der Hauptleitung (28) angeordnet ist.

5. Vorrichtung nach einem der Ansprüche 1 bis 4, dadurch gekennzeichnet, daß in der Nebenleitung (9; 29) hinter der Einmündung (12; 32) der Zusatzstoff-Zuleitung (13; 33) ein Mischer (14; 34) angeordnet ist.

6. Vorrichtung nach einem der Ansprüche 1 bis 5, dadurch gekennzeichnet, daß hinter der Vereinigung (15; 35) der Hauptleitung (8; 28) mit der Nebenleitung (9; 29) ein Mischer (16; 36) in der Reaktionskomponenten-Zuleitung (4; 24) angeordnet ist.

## Claims

1. Apparatus for producing a polyurethane reaction mixture from flowable reactants and a flowable additive, in particular a blowing agent, the additive being pre-mixed with a partial stream of one of the reactants, comprising reactant storage containers (1, 2; 21, 22) and an additive storage container (3; 23), supply lines (4, 17; 24, 37) leading from the reactant storage containers (1, 2; 21, 22) to a mixing head (6; 26) by way of first dosing pumps (5, 18; 25, 38) and an additive supply line (13; 33) leading from the additive storage container (3; 23) and opening into the supply line (4; 24) of the reactant to be charged with flowable additive, this supply line (4; 24) branching into a main line (8; 28) and a secondary line (9; 29), a second dosing pump (10; 30) and a third dosing pump (11; 31), between which the additive supply line (13; 33) opens, being arranged in the secondary line (9; 29), the third dosing pump (11; 31) having an output with respect to the second dosing pump (10; 30) which is higher by the quantity of additive to be supplied, and the secondary line (9; 29) rejoining the main line (8; 28) downstream of the third dosing pump (11; 31).

2. Apparatus according to Claim 1, characterized in that the output of the second dosing pump (10; 30) is substantially smaller than that of the first delivery pump (5; 25).

3. Apparatus according to Claim 1 or 2, characterized in that the first dosing pump (5) is arranged in the supply line (4) before the latter's branch (7) into the main line (8) and secondary line (9).

4. Apparatus according to Claim 1 or 2, characterized in that the first dosing pump (25) is arranged parallel to the second and third dosing pump (30, 31) in the main line (28).

5. Apparatus according to one of Claims 1 to 4, characterized in that a mixer (14; 34) is arranged in the secondary line (9; 29) downstream of the opening (12; 32) of the additive supply line (13; 33).

6. Apparatus according to one of Claims 1 to 5, characterized in that a mixer (16; 36) is arranged in the reactant supply line (4; 24) downstream of the junction (15; 35) of the main line (8; 28) and the secondary line (9; 29).

## Revendications

1. Appareillage pour la préparation d'un mélange réactionnel de polyuréthane à partir de composants de réaction fluides et d'un additif fluide, en particulier un agent porogène, dans lequel l'additif est soumis à mélange préalable avec un courant partiel de l'un des composants de réaction, cet appareillage consistant en réservoirs des composants de réaction (1, 2 ; 21, 22) et un réservoir d'additif (3; 23), des conduits (4, 17 ; 24, 37) partant des réservoirs de composants de réaction (1, 2 ; 21, 22) menant à des premières pompes doseuses (5, 18 ; 25, 28) puis à une tête de mélange (6 ; 26) et un conduit d'alimentation en additif (13 ; 33) provenant du réservoir d'additif (3 ; 23) et débouchant dans le conduit (4 ; 24) du composant de réaction à charger de l'additif fluide, ce conduit (4 ; 24) étant divisé en un conduit principal (8 ; 28) et un conduit auxiliaire (9 ; 29), avec, dans le conduit auxiliaire (9 ; 29) une deuxième pompe doseuse (10 ; 30) et une troisième pompe doseuse (11 ; 31) entre lesquelles débouche le conduit d'alimentation de l'additif (13 ; 33), la troisième pompe doseuse (11 ; 31) ayant, à l'égard de l'additif à apporter, un débit supérieur à celui de la deuxième pompe doseuse (10 ; 30), et le conduit auxiliaire (9 ; 29) se réunissant avec le conduit principal (8 ; 28) en aval de la troisième pompe doseuse (11 ; 31).

2. Appareillage selon la revendication 1, caractérisé en ce que le débit de la deuxième pompe doseuse (10 ; 30) est nettement inférieur à celui de la première pompe d'alimentation (5 ; 25).

3. Appareillage selon la revendication 1 ou 2, caractérisé en ce que la première pompe doseuse (5) est disposée dans le conduit (4) avant la division (7) de celui-ci en le conduit principal (8) et le conduit auxiliaire (9).

4. Appareillage selon la revendication 1 ou 2, caractérisé en ce que la première pompe doseuse est disposée dans le conduit principal (28) parallèlement à la deuxième et la troisième pompe doseuse (30, 31).

5. Appareillage selon l'une des revendications 1 à 4, caractérisé en ce que, dans le conduit auxiliaire (9 ; 29) derrière le point de débouchage (12 ; 32) du conduit d'additif (13 ; 33), on a placé un mélangeur (14 ; 34).

6. Appareillage selon l'une des revendications 1 à 5, caractérisé en ce que derrière le point de jonction (15 ; 35) du conduit principal (8 ; 28) et du conduit auxiliaire (9 ; 29), on a disposé un mélangeur (16 ; 36) dans le conduit d'alimentation du composant de réaction (4 ; 24).
